# EUROPÄISCHE PATENTSCHRIFT

(11) **EP 2 786 036 B1**
(45) Veröffentlichungstag und Bekanntmachung des Hinweises auf die Patenterteilung: **13.12.2017**
(21) Anmeldenummer: 12786825.5
(22) Anmeldetag: 30.10.2012
(51) Int. Cl.: F16D 59/02

(54) **BREMSANORDNUNG**
BRAKE ARRANGEMENT
SYSTÈME DE FREINAGE

(30) Priorität: 29.11.2011 DE 102011119604
(43) Veröffentlichungstag der Anmeldung: 08.10.2014
(73) Patentinhaber: Sew-Eurodrive GmbH & Co. KG, 76646 Bruchsal (DE)
(72) Erfinder: BECKER, Günter, 76684 Östringen (DE); DEGEN, Dirk, 76646 Bruchsal (DE)
(86) Internationale Anmeldenummer: PCT/EP2012/004539
(87) Internationale Veröffentlichungsnummer: WO 2013/079143

(56) Entgegenhaltungen:
- WO-A1-03/081752
- FR-A1- 2 720 806
- US-A- 4 445 596
- US-A- 4 476 965

## Beschreibung

Die Erfindung betrifft eine Bremsanordnung.

Es ist allgemein bekannt, dass bei elektromagnetisch betätigbaren Bremsen mittels Bestromung einer Spulenwicklung, also Bremsspule, ein Magnetfeld erzeugt wird, welches eine Ankerscheibe entgegen der von Federelementen erzeugten Federkraft in axialer Richtung anzieht und somit die Bremse lüftbar ist. Bei Nichtbestromung drücken die Federelemente die Ankerscheibe auf einen mit einer Welle der Bremse drehfest und axial verschieblich angeordneten Bremsbelagträger, so dass dieser an einer Bremsfläche und an der Ankerscheibe beidseitig anliegt und Bremskraft erzeugt wird.

Aus der US 4 476 965 A ist eine entsprechende elektromagnetisch betätigbare Bremse bekannt.

Aus der WO 03/081752A1 ist eine Anordnung mit Bremsscheibe und Drehmomentdurchleitung bekannt.

Aus der FR 2 720 806 A1 ist eine Bremsanordnung für eine rotierende Welle bekannt.

Aus der US 4 445 596 A ist ebenfalls eine elektromagnetisch betätigbare Bremse bekannt.

Der Erfindung liegt daher die Aufgabe zugrunde, eine Bremsanordnung weiterzubilden, wobei eine Haltebrems-Eigenschaft erreichbar sein soll.

Erfindungsgemäß wird die Aufgabe bei der Bremsanordnung nach den in Anspruch 1 angegebenen Merkmalen gelöst.

Wichtige Merkmale der Erfindung bei der Bremsanordnung nach Anspruch 1 sind, dass die Bremsanordnung eine abtreibende Welle aufweist, auf der ein Bremsbelagträger drehfest verbunden und axial, insbesondere also in Wellenachsrichtung, bewegbar angeordnet ist,
wobei eine eine Bremsfläche aufweisende Scheibe, insbesondere Ankerscheibe, mit einem Gehäuseteil der Bremse verbunden, insbesondere fest verbunden, ist,
wobei zwischen einer antreibenden Welle und dem Belagträger zumindest eine Kugel angeordnet ist, die in Umfangsrichtung in einem relativ zum Belagträger vorgesehenen Umfangswinkelabschnitt bewegbar ist, insbesondere entgegen einer von Federelementen erzeugten Federkraft,
wobei abhängig von der jeweiligen Umfangswinkelposition der Kugel die Kugel den Belagträger (7) auf eine jeweilige zugehörige axiale Position schiebt,
insbesondere wobei die Federkraft von dem jeweiligen Umfangswinkel abhängt,
insbesondere wobei der Abstand zwischen Belagträger und der die Bremsfläche aufweisenden Scheibe in axialer Richtung von der jeweiligen Umfangswinkelposition abhängt, insbesondere nicht konstant ist,

Von Vorteil ist dabei, dass die Bremsanordnung als Bremse oder integriert in einer anderen Vorrichtung, wie beispielsweise Elektromotor oder Getriebe oder Kupplung, ausführbar ist. Bei Ausführung eines Elektromotors mit Bremse wird diese Bremsanordnung als Bremsmotor bezeichnet.

Vorteilig ist bei der Erfindung, dass die Bremsanordnung eine antreibende Welle aufweist, an welche von einem Elektromotor Drehmoment einleitbar ist. Somit wird das Drehmoment von der antreibenden Welle über die Kugeln an den ersten Bremsbelagträger weitergeleitet und von dort über eine Mitnehmerverzahnung an eine abtreibende Welle, an welcher eine Last vorgesehen ist. Bei ausgeschaltetem Motor, also Unterschreiten des lastseitig anliegenden Drehmomentbetrags durch den vom Motor eingeleitete Drehmomentbetrag , fällt die Bremse ein. Dabei wird also der Bremsbelagträger mit seinem Bremsbelag gegen eine Bremsfläche einer Scheibe, insbesondere Ankerscheibe, gedrückt. Die Scheibe ist dabei mit dem Gehäuse der Bremsanordnung fest verbunden, wobei die antreibende und die abtreibende Welle jeweils über Lager in diesem Gehäuse gelagert sind. Das Gehäuse ist mehrteilig ausgeführt, wobei die Scheibe zumindest teilweise gehäusebildende Funktion mitübernimmt, da sie zwischen zwei Gehäuseteilen anordenbar ist und somit zur Bildung der Außenoberfläche der Bremsanordnung beiträgt.

Weiter vorteilig ist bei der Erfindung, dass die antreibende Welle Drehmoment über die Kugeln oder ähnlich wirkende Ausrückelemente leitet. Wenn dabei das vom Motor eingeleitete Drehmoment das lastseitig anliegende Drehmoment wesentlich überschreitet, werden die Ausrückelemente, insbesondere also Kugeln, jeweils in Umfangsrichtung entgegen einer jeweils rückstellend wirkenden Federkraft aus ihrer Ruhelage ausgerückt. Dabei stellt die Ruhelage ein lokales Extremum für einerseits den Federkraftbetrag und andererseits für die funktionale Abhängigkeit der axialen Position des ersten Bremsbelagträgers von der Umfangswinkelposition dar. Als Umfangswinkel wird hierbei die relativ zum ersten Belagträger gemessene Umfangswinkel verstanden. Denn der erste Belagträger und die Ausrückelemente werden von der antreibenden Welle in Drehbewegung versetzt und die Ausrückelemente können sich nur in einem begrenzten Umfangswinkelabschnitt relativ zum ersten Bremsbelagträger bewegen. Bei dieser Bewegung, welche entgegen der Federkraft aus der Ruhelage heraus geschieht, wird die axiale Position des ersten Bremsbelagträgers beeinflusst. Insbesondere wird der Abstand zwischen erstem Bremsbelagträger und Scheibe verändert.

Auf diese Weise ist also ein automatisches Lüften der Bremse bei eingeschaltetem Motor und ein automatisches Einfallen der Bremse bei nicht bestromtem Motor erreichbar. Diese so bewirkte Haltebremsfunktion kommt ohne elektromagnetische oder sonstige Ansteuerung aus. Die Haltebremsfunktion ist somit rein mechanisch bewirkt und stellt daher eine erhöhte Sicherheit dar.

Bei einer vorteilhaften Ausgestaltung weist die Bremsanordnung eine abtreibende Welle auf, auf der ein Bremsbelagträger drehfest verbunden und axial, insbesondere also in Wellenachsrichtung, bewegbar angeordnet ist, wobei eine eine Bremsfläche aufweisende Scheibe, insbesondere Ankerscheibe, mit einem Gehäuseteil der Bremse verbunden, insbesondere fest verbunden, ist,
wobei zwischen einer antreibenden Welle und dem Belagträger zumindest eine Kugel angeordnet ist, die in einem in Umfangsrichtung sich erstreckenden, derart eine in Umfangsrichtung veränderliche Nut-Tiefe aufweisenden Nutabschnitt des Belagträgers derart angeordnet ist,
dass ein Bremsbelag des Belagträgers auf eine Bremsfläche der Scheibe gedrückt wird, wenn die Kugel in einem ersten Bereich des Nutabschnitts sich befindet, insbesondere entgegen einer von Federelementen erzeugten Federkraft,
insbesondere und dass der Bremsbelag des Belagträgers von der Bremsfläche der Scheibe axial entfernt wird, wenn die Kugel in einem anderen Bereich des Nutabschnitts sich befindet, insbesondere entgegen einer von Federelementen erzeugten Federkraft.

Die Vorteile entsprechen den zur Ausführung nach Anspruch 1 vorgenannten Vorteilen. Zusätzlich ist von Vorteil, dass die einfache Ausbildung einer entsprechenden Nutkontur die Funktion der Haltebremse in einfacher Weise realisierbar ist. Denn die Nutkontur ist als Nachbearbeitung der Stirnseite des ersten Belagträgers einbringbar und daher ohne besonderen Aufwand ausführbar.

Bei einer vorteilhaften Ausgestaltung wird das von der antreibenden Welle an die abtreibende Welle geleitete Drehmoment zumindest teilweise über die mindestens eine Kugel geleitet. Von Vorteil ist dabei, dass die Kugel als Ausrückelement einsetzbar ist und die Drehmomentdurchleitung durch das Ausrückelement verwendbar ist zum Steuern der Bremsfunktion. Bei Verwendung von Kugeln als Ausrückelement ist eine besonders geringe Reibung erreichbar und somit ein besonders geringes kritisches vom antreibenden Motor eingeleitetes Mindestdrehmoment zum Lüften der Bremse realisierbar.

Bei einer vorteilhaften Ausgestaltung weist die zur Umfangswinkelposition jeweils zugehörige axiale Position als Funktion der Umfangswinkelposition im Umfangswinkelabschnitt ein lokales Extremum, insbesondere ein einziges Maximum oder Minimum, auf, insbesondere wobei der Betrag der Federkraft ebenfalls als Funktion der Umfangswinkelposition im Umfangswinkelabschnitt ein lokales Extremum, insbesondere ein einziges Maximum oder Minimum, aufweist,
insbesondere an demselben Umfangswinkel wie das lokale Extremum des Funktionsverlaufs der axialen Position. Von Vorteil ist dabei, dass für beide Drehrichtungen dieselbe Funktion realisierbar ist. Wenn nämlich der Funktionsverlauf, insbesondere auch der Verlauf der Nut-Tiefe in Umfangsrichtung, symmetrisch ist zu einer mittleren Umfangswinkelposition ist das Verhalten in beiden Drehrichtungen gleichartig ausgeprägt. Somit wird das Lüften der Bremse in beiden Drehrichtungen bei gleich großem Drehmomentbetrag erreicht.

Bei einer vorteilhaften Ausgestaltung ist die abtreibende Welle und die antreibende Welle mittels jeweils zumindest eines Lagers am Gehäuseteil oder einem mit diesem fest verbundenen Gehäuseteil gelagert. Von Vorteil ist dabei, dass die Bremsanordnung ein Gehäuse aufweist, so dass die Ausrückelemente geschützt sind und daher keine störenden Schmutzpartikel das Ausrücken der Ausrückelemente hemmen können. Außerdem ist die die Bremsfläche aufweisende Scheibe am Gehäuse festlegbar und somit das Bremsmoment vom Belagträger an die Scheibe beziehungsweise an das Gehäuse ableitbar.

Bei einer vorteilhaften Ausgestaltung ist ein weiterer Bremsbelagträger axial bewegbar auf der antreibenden Welle und/oder auf der von vom ersten Belagträger axial abgewandten Seite der Scheibe angeordnet,
insbesondere wobei mittels der Kugel der minimale axiale Abstand zwischen erstem Belagträger und weiterem Belagträger vorgegeben ist
insbesondere wobei die Scheibe eine weitere Bremsfläche aufweist, gegen welche der weitere Bremsbelagträger drückbar ist, bei entsprechender Umfangswinkelposition der Kugel. Von Vorteil ist dabei, dass somit die Kugel je nach über die Antriebswelle eingeleitetem Drehmoment entgegen der Federkraft einen relativ zum Bremsbelagträger vorgesehenen Umfangswinkel ausgelenkt wird und von dieser Auslenkung der Abstand zwischen Bremsbelagträger und Scheibe bestimmt ist.

Bei einer vorteilhaften Ausgestaltung sind in Umfangsrichtung die Kugeln mittels eines Kugelführungsteils im Wesentlichen regelmäßig voneinander beabstandet gehalten, wobei das Kugelführungsteil mit der antreibenden Welle drehfest verbunden ist. Von Vorteil ist dabei, dass eine einfache Montage und ein sicheres Halten jeder Kugel in der Nut des ersten Belagträgers erreichbar ist. Die abtreibende Welle weist eine Mitnehmerverzahnung auf, die im Eingriff steht mit einer Innenverzahnung des ersten Belagträgers. Von Vorteil ist dabei, dass der erste Belagträger axial verschieblich angeordnet ist und trotzdem drehfest verbunden ist mit der abtreibenden Welle. Auf diese Weise wird das von der antreibenden Welle über die Ausrückelemente an den ersten Bremsbelagträger eingeleitete Drehmoment an die abtreibende Welle abgeleitet.

Bei einer vorteilhaften Ausgestaltung sind der erste und/oder der weitere Belagträger mit einer jeweiligen ersten beziehungsweise zweiten Scheibe verbunden oder einstückig mit dieser jeweils ausgeführt. Von Vorteil ist dabei, dass eine erhöhte mechanische Festigkeit erreichbar ist und gewisse Teile, wie beispielsweise Bremsbelagträger, für andere Bremsanordnungen verwendbar sind. Somit ist in einem Baukasten zur Herstellung von Bremsen mit einer geringen Teilezahl eine hohe Varianz an Bremsen herstellbar.

Bei einer vorteilhaften Ausgestaltung sind erster und zweiter Belagträger mittels axial sich erstreckender Bolzen direkt oder über jeweils mit den Belagträgern verbundene Scheiben verbunden und auf den Belagträger drückende Federelemente derart an den Bolzen oder an mit den Bolzen verbundenen Muttern abgestützt, dass die Kugeln im lokalen Extremum gehalten sind, solange kein wesentliches Drehmoment von der antreibenden Welle durch die Kugeln übertragen wird zum ersten Bremsbelagträger hin. Von Vorteil ist dabei, dass die Bolzen durch einen der Belagträger hindurchragen und somit Federelemente sich zwischen der axial vom anderen Belagträger abgewandten Seite des Belagträgers und dem Bolzen abstützen. Somit drücken die Federelemente die Belagträger sozusagen aufeinander zu und daher beidseitig auf die Ankerscheibe.

Bei einer vorteilhaften Ausgestaltung verläuft der Nutabschnitt, insbesondere die Nut-Tiefe, in Umfangsrichtung im Wesentlichen U- oder V-förmig. Von Vorteil ist dabei, dass ein einfacher und/oder symmetrischer Verlauf ausreichend ist.

Bei einer vorteilhaften Ausgestaltung wird statt der Kugel ein anderes Ausrückelement verwendet. Von Vorteil ist dabei, dass statt einer Punktberührung zwischen der Kugel und einer Berührfläche eine Linienberührung oder gar Flächenberührung zwischen Ausrückelement und Berührfläche erreichbar ist.

Weitere Vorteile ergeben sich aus den Unteransprüchen.

Die Erfindung wird nun anhand von Abbildungen näher erläutert:
In der Figur 1 ist ein erfindungsgemäßes Ausführungsbeispiel in Explosionsdarstellung gezeigt, wobei die Gegenbremsflächen nicht dargestellt sind.

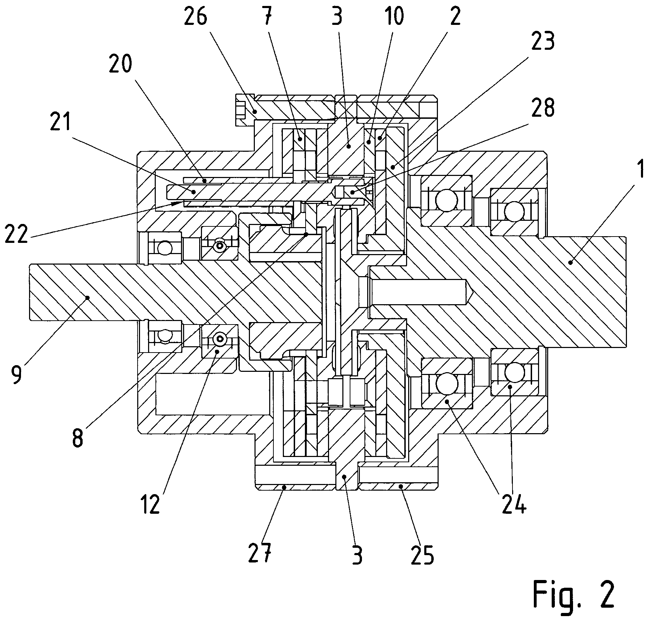

In Figur 2 ist eine zugehörige Schnittansicht gezeigt.

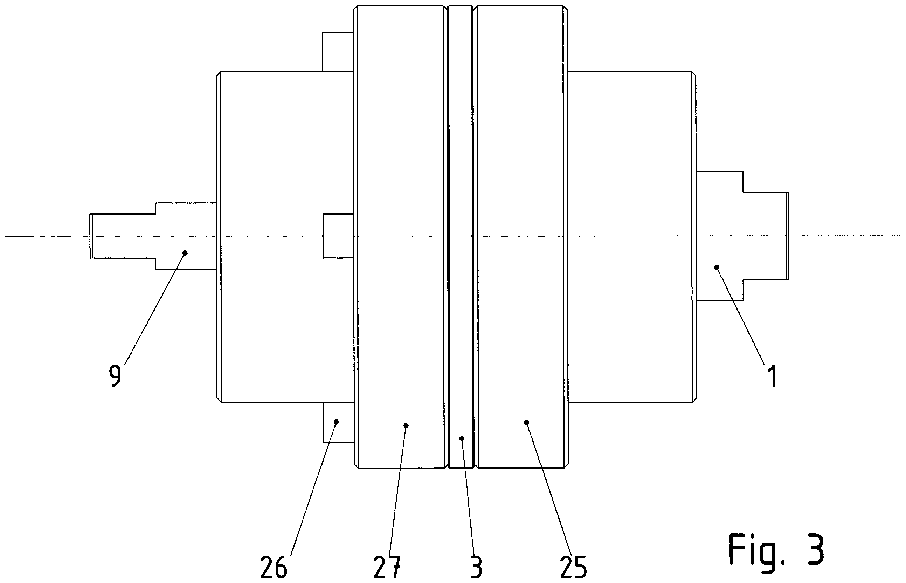

In der Figur 3 ist ein Außenansicht der Bremsanordnung gezeigt.

Wie in den Figuren gezeigt, weist die Bremsanordnung eine eintreibende Welle 1 auf, mit welcher ein Belagträger 2 drehfest, aber axial, also in Richtung der Wellenachse, verschieblich angeordnet ist.

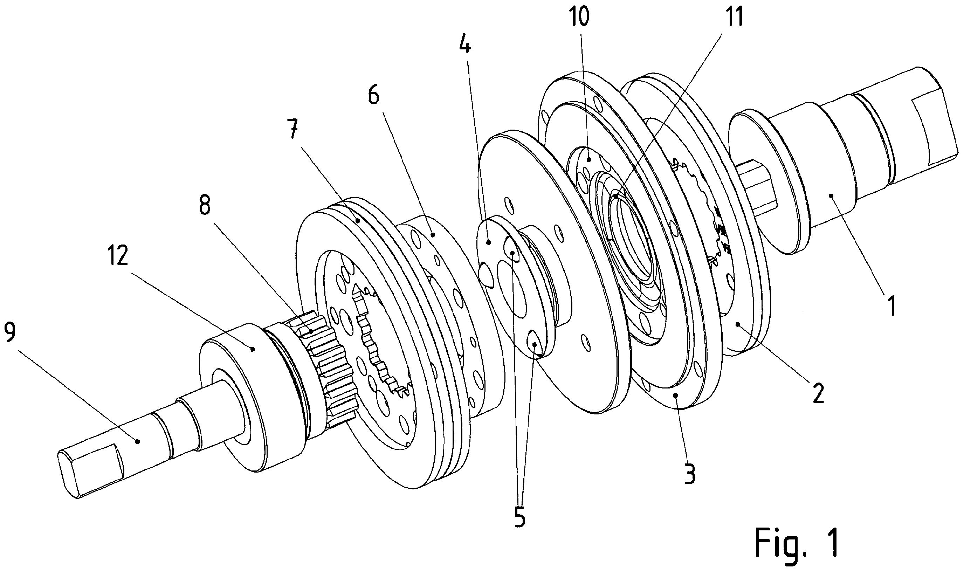

Wie in Figur 1 gezeigt, sitzt der Belagträger 2 auf einem außenzylindrisch ausgeformten Wellenabschnitt des Kugelführungsteils 4 auf. Auf diesem Wellenabschnitt ist auch ein Gleitlager 11 der Scheibe 10 angeordnet, welche mit dem Belagträger 2 fest, insbesondere drehfest und in axialer Richtung fest, verbunden ist. Somit ist der Belagträger 2 in axialer Richtung geführt.

Bei Einfallen der Bremse wird der Belagträger 2 gegen die ihm zugewandte Seite einer Ankerscheibe 3 gepresst. Hierbei wird der Belagträger 2 axial verschoben. Die Ankerscheibe 3 jedoch ist mit dem Gehäuse verbunden und somit fest und unbeweglich an ihm vorgesehen. Die Ankerscheibe 3 ist als Lochscheibe aus Stahl ausführbar. Die Ankerscheibe 3 dreht also nicht mit der eintreibenden Welle 1 mit.

Ebenso ist mit einer abtreibenden, über ein Lager 12 im Gehäuse gelagerten Welle 9 ein weiterer Belagträger 7 drehfest, aber axial verschieblich verbunden. Hierzu weist dieser Belagträger 7 eine Mitnehmerverzahnung auf, die im Eingriff steht mit einer an der Welle 9 ausgebildeten Außenverzahnung.

Auch dieser weitere Belagträger 7 wird beim Einfallen der Bremse gegen die Ankerscheibe 3 gedrückt, wobei die zugehörige Bremsfläche an der Ankerscheibe auf deren von dem Belagträger 2 abgewandten axialen Seite angeordnet ist.

Die eintreibende Welle 1 weist einen zur abtreibenden Welle 9 zugewandten, als Vierkant ausgebildeten Endbereich auf, so dass ein mit einem Innenvierkant hohl ausgebildetes Kugelführungsteil 4 aufsteckbar und bei Einwirken entsprechend hohe Kräfte axial bewegbar ist.

Am Kugelführungsteil 4 sind Kugeln 5 angeordnet, welche jeweils in einer Ausnehmung des Kugelführungsteils 4 sich befinden. Das Kugelführungsteil 4 beabstandet somit die Kugeln 5 in Umfangsrichtung voneinander. Die Scheibe 6 wird von den Kugeln 5 berührt und ist mit der abtreibenden Welle 9 drehfest verbunden.

Da die Berührfläche der Scheibe 6 eine einer jeweiligen Kugel 5 zugeordnete, in Umfangsrichtung verlaufende Ausführschräge aufweist, die mit zunehmender Umfangsrichtung axial erhöht ist, rücken die Kugeln 5 bei vom Motor her anliegendem Drehmoment in axialer Richtung aus und drücken somit die beiden Scheiben 4, 6 und 10 in axialer Richtung auseinander. Wenn also das vom Motor auf die antreibende Welle 1 eingebrachte Drehmoment höher ist als das an der abtreibenden Welle 9 anliegende Lastmoment, wird die Bremse gelüftet. Wenn das vom Motor auf die antreibende Welle 1 eingebrachte Drehmoment geringer ist als das Lastmoment, fällt die Bremse ein. Insbesondere fällt also die Bremse ein, wenn der Motor ausgeschaltet ist.

Somit ist die Bremse als Haltebremse verwendbar.

Das Ausrücken der Kugeln 5 erfolgt gegen die Wirkung von Federelementen 20.

Die Ausrückbewegung wird begrenzt durch axiale Anschläge, insbesondere entsprechende Wellenbünde, an der eintreibenden Welle 1 und der abtreibenden Welle 9, wobei der Belagträger 7 an einem entsprechenden Wellenbund der abtreibenden Welle 9 und der Belagträger 2 an einem entsprechenden Wellenbund der eintreibenden Welle 1 anschlägt.

Die eintreibende Welle 1 ist über Lager 24 im Gehäuseteil 25 gelagert, wobei die Ankerscheibe 3 zwischen dem Gehäuseteil 25 und dem Gehäuseteil 27 mittels einer durch die Ankerscheiben 3 hindurchgeführten Verbindungsschraube 26 festgelegt ist, welche die beiden Gehäuseteile (25, 27) gegeneinander verschraubt.

Mittels der Schraube 28 ist ein Bolzen 21 mit der Scheibe 10 schraubverbunden und somit auch mit dem Belagträger 2 verbunden. Der sich axial erstreckende Bolzen ragt durch Ausnehmungen des Belagträgers 7 und auch der Scheibe 6 hindurch. An seinem axialen Endbereich weist der Bolzen einen Außengewindebereich auf, auf welchen eine Mutter aufgeschraubt ist, an welcher sich ein Federelement 20 abstützt, das auch am Belagträger 7 beziehungsweise an der Scheibe 6 sich abstützt.

Somit werden die Belagträger 2 und 7 von den Federelementen 20 aufeinander zu gedrückt. Wenn also die Kugeln 5 nicht ausrücken, werden die Belagträger 2 und 7 von jeweils axial entgegengesetzter Richtung aus auf die Ankerscheibe 3 gedrückt und die Bremse ist somit im eingefallenen Zustand und erzeugt Bremskraft.

Nur wenn das vom Motor erzeugte Drehmoment größer ist als das lastseitig anliegende Drehmoment, wenn also das Drehmoment vom Motor aus durch die Mitnehmerverzahnung 8 zur Last geleitet wird, lüftet die Bremse, indem die aus ihrem in axialer Richtung angeordneten Tiefpunkt ausrückenden Kugeln 5 entgegen der Federkraft der Federelemente 20 die Belagträger 2 und auseinander drücken.

Infolge der genannten axialen Begrenzung der Belagträger 2 und 7, insbesondere also der genannten Anschläge beziehungsweise Wellenbunde, ist der axiale Hub der Kugeln 5 begrenzt.

Die Kugeln 5 berühren die Scheiben 6 und 10. Zum Ausrücken aus dem Tiefpunkt weisen die Scheiben 6 und 10 jeweils die genannte Ausführschräge auf. Hierzu wird an jeder Scheiben 6 und 10 ein in die der Kugel jeweils zugewandten Seite der Scheiben 6 und 10 ein Nutabschnitt vorgesehen, welcher sich in Umfangsrichtung über einen endlichen Winkelbereich erstreckt, insbesondere zwischen 5° und 25°. Somit sind auf gleichem Radialabstand in Umfangsrichtung mehrere voneinander beabstandete Nutabschnitte anordenbar und somit auch mehrere der Kugeln 5.

Der Nutboden des Nutabschnitts ist dabei nicht mit konstanter Tiefe ausgearbeitet sondern weist einen in Umfangsrichtung zunehmenden Tiefenverlauf auf. Somit bewegt sich die Kugel beim Durchlaufen des Nutabschnitts in axialer Richtung. Da der Abstand der Scheiben 6 und 10 zueinander durch die Position der Kugel 5 bestimmt ist, wird der Abstand beim Durchlaufen des Nutabschnitts mittels der Kugel 5 verändert. Dabei nimmt der axiale Abstand zwischen den Scheiben 6 und 10 zu, wenn die Kugel 5 aus dem in axialer Richtung tiefsten Punkt ausrückt.

Vorzugsweise sind die Mitnehmerverzahnungen der Belagträger (2, 7) jeweils als Evolventenverzahnungen ausgeführt.

Bei einem weiteren erfindungsgemäßen Ausführungsbeispiel sind die Belagträger 2 und 7 mit den ihnen jeweils zugeordneten Scheiben 10 beziehungsweise 6 einstückig ausgeführt.

Bei einem anderen erfindungsgemäßen Ausführungsbeispiel sind Kugelführungsteil 4 und eintreibende Welle 1 einstückig ausgeführt.

Bei einem alternativen Ausführungsbeispiel wird das Kugelführungsteil 4 aufgepresst auf den als Vierkant ausgebildeten Endbereich der eintreibenden Welle 1.

Bei einem weiteren alternativen Ausführungsbeispiel wird das Kugelführungsteil 4 drehfest ohne Vierkant mit dem der abtreibenden Welle 9 zugewandten Endbereich der eintreibenden Welle 1 verbunden, insbesondere kraftschlüssig, formschlüssig und/oder stoffschlüssig.

Bei einem weiteren erfindungsgemäßen Ausführungsbeispiel sind nicht zwei sondern nur ein einziger Belagträger 7 vorhanden. Der Belagträger 2 ist somit nicht vorhanden sondern nur die Scheibe 10, die dann mit der antreibenden Welle 1 fest, also im Wesentlichen nicht axial verschieblich, verbunden ist. Alternativ ist statt der Scheibe 10 auch ein Wellenbund an der eintreibenden Welle 1 ausbildbar, an welchem sich direkt oder über Bolzen indirekt die Federelemente abstützen, welche auf den dann einzigen Belagträger 7 drücken, der wiederum drehfest aber axial bewegbar mit der abtreibenden Welle verbunden ist. Die die Bremsfläche aufweisende Scheibe 3 ist dabei wiederum fest mit dem Gehäuse verbunden, in welchem wiederum die antreibende, also motorseitige, und abtreibende, also lastseitige, Welle über jeweilige Lager, insbesondere wiederum Kugellager, gelagert sind.

### Bezugszeichenliste

1 eintreibende Welle
2 Belagträger
3 Ankerscheibe
4 Kugelführungsteil
5 Kugeln
6 Scheibe, insbesondere verbindbar mit dem Belagträger 7
7 Belagträger
8 Mitnehmerverzahnung
9 abtreibende Welle
10 Scheibe, insbesondere verbindbar mit dem Belagträger 2
11 Gleitlager
12 Lager für abtreibende Welle 9
20 Federelemente
21 Bolzen
22 Mutter
23 Platte
24 Lager der eintreibenden Welle 1
25 Gehäuseteil
26 Verbindungsschraube
27 Gehäuseteil

## Patentansprüche

1. Bremsanordnung, wobei die Bremsanordnung eine abtreibende Welle (9) aufweist, auf der ein Bremsbelagträger (7) drehfest verbunden ist,
**dadurch gekennzeichnet, dass** die abtreibende Welle eine Mitnehmerverzahnung aufweist, die im Eingriff steht mit einer Innenverzahnung des ersten Belagträgers (7), so dass der Bremsbelagträger (7) axial, relativ zur abtreibenden Welle bewegbar angeordnet ist,
wobei eine eine Bremsfläche aufweisende Scheibe (3), mit einem Gehäuseteil der Bremse verbunden, ist,
wobei zwischen einer antreibenden Welle und dem Belagträger (7) zumindest eine Kugel angeordnet ist, die in Umfangsrichtung in einem relativ zum Belagträger (7) vorgesehenen Umfangswinkelabschnitt bewegbar ist,
wobei abhängig von der jeweiligen Umfangswinkelposition der Kugel die Kugel den Belagträger (7) auf eine jeweilige zugehörige axiale Position schiebt,

2. Bremsanordnung nach Anspruch 1,
**dadurch gekennzeichnet, dass**
zwischen der antreibenden Welle und dem Belagträger (7) zumindest eine Kugel angeordnet ist, die in einem in Umfangsrichtung sich erstreckenden, derart eine in Umfangsrichtung veränderliche Nut-Tiefe aufweisenden Nutabschnitt des Belagträgers (7) derart angeordnet ist,
- dass ein Bremsbelag des Belagträgers auf eine Bremsfläche der Scheibe (3) gedrückt wird, wenn die Kugel in einem ersten Bereich des Nutabschnitts sich befindet,
- und dass der Bremsbelag des Belagträgers von der Bremsfläche der Scheibe (3) axial entfernt wird, wenn die Kugel in einem anderen Bereich des Nutabschnitts sich befindet.

3. Bremsanordnung nach mindestens einem der vorangegangenen Ansprüche,
**dadurch gekennzeichnet, dass**
das von der antreibenden Welle an die abtreibende Welle geleitete Drehmoment zumindest teilweise über die mindestens eine Kugel geleitet wird.

4. Bremsanordnung nach mindestens einem der vorangegangenen Ansprüche,
**dadurch gekennzeichnet, dass**
die zur Umfangswinkelposition jeweils zugehörige axiale Position als Funktion der Umfangswinkelposition im Umfangswinkelabschnitt ein lokales Extremum aufweist.

5. Bremsanordnung nach mindestens einem der vorangegangenen Ansprüche,
**dadurch gekennzeichnet, dass**
die abtreibende Welle und die antreibende Welle mittels jeweils zumindest eines Lagers am Gehäuseteil oder einem mit diesem fest verbundenen Gehäuseteil gelagert ist.

6. Bremsanordnung nach mindestens einem der vorangegangenen Ansprüche,
**dadurch gekennzeichnet, dass**
ein weiterer Bremsbelagträger axial bewegbar auf der antreibenden Welle und/oder auf der von vom ersten Belagträger (7) axial abgewandten Seite der Scheibe (3) angeordnet ist,

7. Bremsanordnung nach mindestens einem der vorangegangenen Ansprüche,
**dadurch gekennzeichnet, dass**
in Umfangsrichtung die Kugeln mittels eines Kugelführungsteils im Wesentlichen regelmäßig voneinander beabstandet gehalten sind,
wobei das Kugelführungsteil mit der antreibenden Welle drehfest verbunden ist.

8. Bremsanordnung nach mindestens einem der vorangegangenen Ansprüche,
**dadurch gekennzeichnet, dass**
der erste und/oder der weitere Belagträger (2, 7) mit einer jeweiligen ersten beziehungsweise zweiten Scheibe verbunden oder einstückig mit dieser jeweils ausgeführt sind.

9. Bremsanordnung nach mindestens einem der vorangegangenen Ansprüche,
**dadurch gekennzeichnet, dass**
erster und zweiter Belagträger mittels axial sich erstreckender Bolzen direkt oder über jeweils mit den Belagträgern verbundene Scheiben (6, 10) verbunden sind und auf den Belagträger drückende Federelemente derart an den Bolzen oder an mit den Bolzen verbundenen Muttern abgestützt sind, dass die Kugeln im lokalen Extremum gehalten sind, solange kein wesentliches Drehmoment von der antreibenden Welle durch die Kugeln übertragen wird zum ersten Bremsbelagträger (7) hin.

10. Bremsanordnung nach mindestens einem der vorangegangenen Ansprüche,
**dadurch gekennzeichnet, dass**
der Nutabschnitt, in Umfangsrichtung im Wesentlichen U- oder V-förmig verläuft.

## Claims

1. A braking arrangement, wherein the braking arrangement has an output shaft (9) on which a brake lining carrier (7) is non-rotatably connected,
**characterised in that**
the output shaft has driver toothing which is engaged with internal toothing of the first lining carrier (7), so that the brake lining carrier (7) is arranged so as to be movable axially relative to the output shaft,
with a disc (3) having a braking surface being connected to a housing part of the brake,
with at least one ball being arranged between a driving shaft and the lining carrier (7), which ball is movable in the peripheral direction in an angle-at-circumference portion provided relative to the lining carrier (7),
with the ball pushing the lining carrier (7) onto a respective associated axial position depending on the respective angle-at-circumference position of the ball.

2. A braking arrangement according to Claim 1,
**characterised in that**
at least one ball is arranged between the driving shaft and the lining carrier (7), which ball is arranged in a groove portion of the lining carrier (7) which extends in the peripheral direction and has in such a way [sic] a groove depth which is changeable in the peripheral direction, in such a way
- that a brake lining of the lining carrier is pressed onto a braking surface of the disc (3) if the ball is located in a first region of the groove portion,
- and that the brake lining of the lining carrier is axially removed from the braking surface of the disc (3) if the ball is located in a different region of the groove portion.

3. A braking arrangement according to at least one of the preceding claims,
**characterised in that**
the torque transmitted from the driving shaft to the output shaft is transmitted at least partially via the at least one ball.

4. A braking arrangement according to at least one of the preceding claims,
**characterised in that**
the axial position which is associated in each case with the angle-at-circumference position has a local extremum as a function of the angle-at-circumference position in the angle-at-circumference portion.

5. A braking arrangement according to at least one of the preceding claims,
**characterised in that**
the output shaft and the driving shaft are mounted on the housing part or a housing part fixedly connected thereto by means of in each case at least one bearing.

6. A braking arrangement according to at least one of the preceding claims,
**characterised in that**
a further brake lining carrier is arranged axially movably on the driving shaft and/or on the of side of the disc (3) axially remote from the first lining carrier (7).

7. A braking arrangement according to at least one of the preceding claims,
**characterised in that**
in the peripheral direction the balls are held substantially regularly spaced apart from each other by means of a ball guidance part,
the ball guidance part being connected non-rotatably to the driving shaft.

8. A braking arrangement according to at least one of the preceding claims,
**characterised in that**
the first and/or the further lining carrier (2, 7) is connected to a respective first or second disc respectively or is/are embodied in one piece therewith in each case.

9. A braking arrangement according to at least one of the preceding claims,
**characterised in that**
the first and second lining carriers are connected by means of axially extending pins directly or via discs (6, 10) connected in each case to the lining carriers, and spring elements which press on the lining carrier are supported on the pins or on nuts connected to the pins in such a manner that the balls are held in the local extremum as long as no substantial torque is transmitted from the driving shaft through the balls to the first brake lining carrier (7).

10. A braking arrangement according to at least one of the preceding claims,
**characterised in that**
the groove portion runs substantially in a U-shape or V-shape in the peripheral direction.

## Revendications

1. Système de freinage, sachant que le système de freinage présente un arbre mené (9) sur lequel un support (7) de garniture de frein est lié en rotation, **caractérisé en ce que** l'arbre mené présente une denture entraîneuse qui se trouve en prise avec une denture intérieure du premier support de garniture (7), de sorte que le support (7) de garniture de frein est disposé à déplacement axial par rapport à l'arbre mené,
sachant qu'un disque (3), présentant une surface de freinage, est relié à un élément de boîtier du frein,
sachant qu'au moins une bille est disposée entre un arbre menant et le support de garniture (7), bille qui peut être déplacée en direction circonférentielle dans un secteur angulaire circonférentiel prévu par rapport au support de garniture (7),
sachant qu'en fonction de la position angulaire circonférentielle respective de la bille, la bille pousse le support de garniture (7) sur une position axiale associée respective.

2. Système de freinage selon la revendication 1, **caractérisé en ce qu'**au moins une bille est disposée entre l'arbre menant et le support de garniture (7), bille qui est disposée, dans une partie de rainure du support de garniture (7) s'étendant en direction circonférentielle et présentant une profondeur de rainure variable en direction circonférentielle, de telle sorte :
- qu'une garniture de frein du support de garniture est pressée sur une surface de freinage du disque (3) lorsque la bille se trouve dans une première région de la partie de rainure,
- et que la garniture de frein du support de garniture est éloignée axialement de la surface de freinage du disque (3) lorsque la bille se trouve dans une autre région de la partie de rainure.

3. Système de freinage selon au moins une des revendications précédentes, **caractérisé en ce que** le couple transmis par l'arbre menant à l'arbre mené est transmis au moins partiellement par l'intermédiaire de la bille au moins unique.

4. Système de freinage selon au moins une des revendications précédentes, **caractérisé en ce que** la position axiale respectivement associée à la position angulaire circonférentielle présente, en tant que fonction de la position angulaire circonférentielle, un extremum local dans le secteur angulaire circonférentiel.

5. Système de freinage selon au moins une des revendications précédentes, **caractérisé en ce que** l'arbre mené et l'arbre menant sont montés, au moyen d'au moins un palier respectif, sur l'élément de boîtier ou sur un élément de boîtier fixement relié à ce dernier.

6. Système de freinage selon au moins une des revendications précédentes, **caractérisé en ce qu'**un autre support de garniture de frein est disposé à déplacement axial sur l'arbre menant et/ou sur le côté du disque (3) qui est axialement éloigné du premier support de garniture (7).

7. Système de freinage selon au moins une des revendications précédentes, **caractérisé en ce que** les billes sont maintenues à intervalles essentiellement réguliers entre elles en direction circonférentielle au moyen d'un élément de guidage de billes,
sachant que l'élément de guidage de billes est lié en rotation à l'arbre menant.

8. Système de freinage selon au moins une des revendications précédentes, **caractérisé en ce que** le premier support de garniture et/ou l'autre support de garniture (2, 7) sont respectivement reliés à un premier disque et à un deuxième disque, ou sont respectivement réalisés d'un seul tenant avec ceux-ci.

9. Système de freinage selon au moins une des revendications précédentes, **caractérisé en ce que** le premier support de garniture et le deuxième support de garniture sont reliés au moyen de boulons s'étendant axialement, directement ou par l'intermédiaire de disques (6, 10) respectivement reliés aux supports de garniture, et des éléments à effet de ressort exerçant une pression sur les supports de garniture sont appuyés contre les boulons, ou contre des écrous reliés aux boulons, de telle sorte que les billes sont maintenues à l'extremum local tant qu'aucun couple notable ou significatif n'est transmis depuis l'arbre menant en direction du premier support de garniture (7) par les billes.

10. Système de freinage selon au moins une des revendications précédentes, **caractérisé en ce que** la partie de rainure s'étend essentiellement en forme de U ou de V en direction circonférentielle.
